Europäisches Patentamt

European Patent Office

Office européen des brevets

(19)

(11) Publication number : **0 466 633 A2**

# (12) EUROPEAN PATENT APPLICATION

(21) Application number : **91630042.9**

(22) Date of filing : **04.07.91**

(51) Int. Cl.⁵ : **B23Q 15/02, B23K 7/00**

(30) Priority : **10.07.90 US 550782**

(43) Date of publication of application :
**15.01.92 Bulletin 92/03**

(84) Designated Contracting States :
**BE CH DE ES FR GB IT LI NL SE**

(71) Applicant : **C.M.I. COMPUTERIZED MACHINES INDUSTRIES LTD.**
**8 Hasadnah Street, Industry Zone**
**43 651 Raanana (IL)**

(72) Inventor : **Shafir, Aaron**
**9 Leon Blum Street**
**69 461 Tel Aviv (IL)**

(74) Representative : **Waxweiler, Jean et al**
**OFFICE DENNEMEYER S.à.r.l. P.O. Box 1502**
**L-1015 Luxembourg (LU)**

(54) **Method and apparatus for monitoring the operation of a working tool, particularly a cutting torch.**

(57)   A cutting torch machine includes a microphone for each cutting torch to detect the sound or "whistle" produced by the gas flow through a cut formed in the workpiece when the workpiece is being properly cut, and to compare the detected sound with a stored reference sound. If there is no match between the two, an indicator is energized to indicate this condition for the respective cutting torch ; and if the machine is in the Automatic mode, it automatically reverses the drive in order to retrace the path of the cutting torch with respect to the workpiece until a match is produced with respect to the stored reference sound, whereupon the cutting is resumed.

EP 0 466 633 A2

Jouve, 18, rue Saint-Denis, 75001 PARIS

FIG-1

The present invention relates to a method and apparatus for monitoring the operation of a working tool with respect to a workpiece. The invention is particularly useful with respect to monitoring the operation of cutting torches, and is therefore described below with respect to this application.

In processes involving the cutting of workpieces (e.g., metal) by cutting torches, the actual cutting of the workpiece may be unintentionally interrupted for any one of many reasons, such as the presence of dirt on the metal workpiece, the lack of homogeneity in the metal workpiece or in the gas supplied to the cutting torch, vibration of the cutting apparatus, etc. Should the cutting process be interrupted, the cutting torch still continues to advance even though no cutting is being performed; in fact, the flow of the cutting gas may even cool the metal workpiece. When this interruption in the cutting process is noted, the operator is required to retrace the cutting steps in order to properly cut the workpiece, or to scrap it altogether.

Cutting apparatus of this type usually includes a plurality of cutting torches which are simultaneously operated on the same workpiece. If the cutting by one of the cutting torches is interrupted, this would normally require retracing the movements of all the cutting torches with respect to the workpiece even though only one cut was interrupted.

Similar problems are involved in other operations of a working tool with respect to a workpiece, such as milling or lathing operations.

An object of the present invention is to provide a method of monitoring the operation of a working tool with respect to a workpiece having advantages in the above respects. Another object of the invention is to provide apparatus for monitoring the operation of a working tool with respect to a workpiece; and a still further object of the invention is to provide both a method and apparatus for monitoring the operation of a cutting torch with respect to workpieces.

According to the present invention, there is provided a method of monitoring the operation of a working tool with respect to a workpiece, comprising: detecting a predetermined characteristic produced by the working tool during its proper working of a workpiece, and storing, as a reference, information corresponding to the predetermined characteristic; detecting the predetermined characteristic produced by the working tool during a subsequent working of a workpiece; and comparing the latter characteristic with the stored reference information to produce an indication whether or not the working tool is properly working the workpiece.

The invention also provides apparatus for monitoring the operation of a working tool, particularly a cutting torch, in accordance with the above method.

More particularly, in one preferred embodiment described below, the predetermined characteristic is or includes the sounds produced during the cutting of the workpiece by the cutting torch; and the detector detects the frequency of the sounds produced during the cutting of the workpiece by the cutting torch. It is contemplated, however, that other predetermined characteristics may be detected, such as the infrared emissions produced by the cutting torch during a cutting operation.

Further features and advantages of the invention will be apparent from the description below.

The invention is herein described, by way of example only, with reference to the accompanying drawings, wherein:

Fig. 1 schematically illustrates one form of apparatus constructed in accordance with the present invention;

Fig. 2 illustrates the working tool in the apparatus of Fig. 1 as a cutting torch;

Figs. 3a, 3b and 3c illustrate three conditions of operation of the cutting torch of Fig. 2 during a cutting operation;

Fig. 4 illustrates the cuts produced on the workpiece by a plurality of cutting torches each as illustrated in Fig. 1;

Fig. 5 illustrates the waveforms outputted by the sound detector in Fig. 1 during a proper "cut" operation, and during an improper cut (i.e., "fail") operation;

Fig. 6 is a block diagram illustrating one form of control system in apparatus constructed in accordance with the present invention;

Fig. 7 illustrates a part of the operation panel in the control system of Fig. 6;

Fig. 8 illustrates the manual controls in the operation panel of Fig. 6;

Fig. 9 illustrates the main commands outputted by the control system to the working machine in the apparatus of Fig. 6;

Fig. 10 is a flow chart illustrating the overall operation of the apparatus of Fig. 6;

Fig. 11 is a flow chart illustrating the Teach-mode operation of the apparatus of Fig. 6;

Fig. 12 is a flow chart illustrating the Automatic-mode operation of the apparatus of Fig. 6; and

Fig. 13 is a flow chart illustrating the Fail procedure in the Automatic-mode operation of the apparatus of Fig. 6.

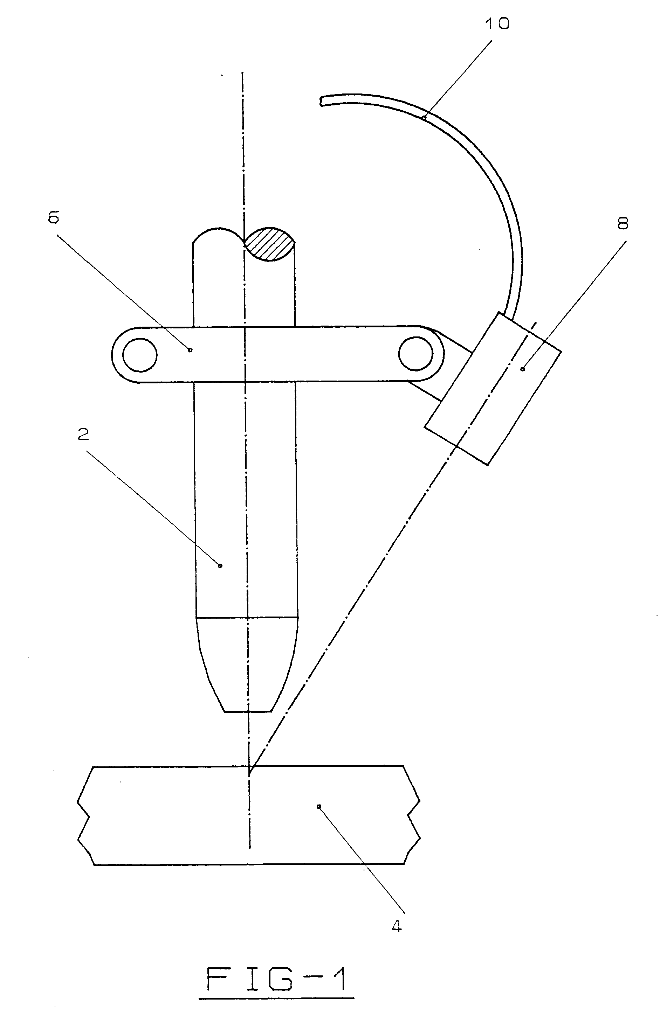

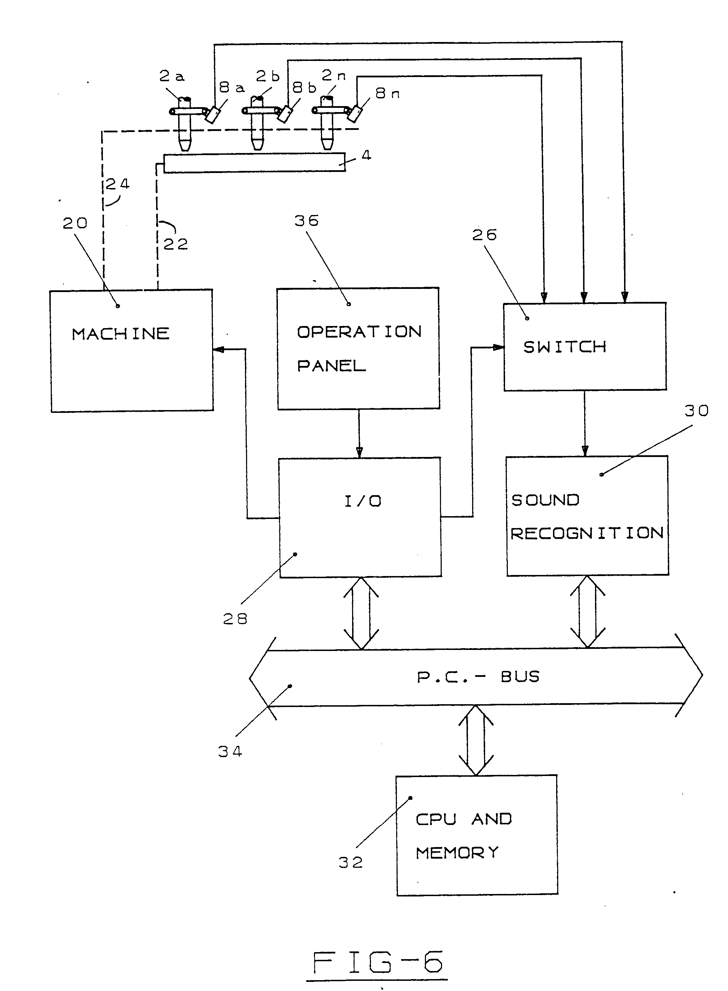

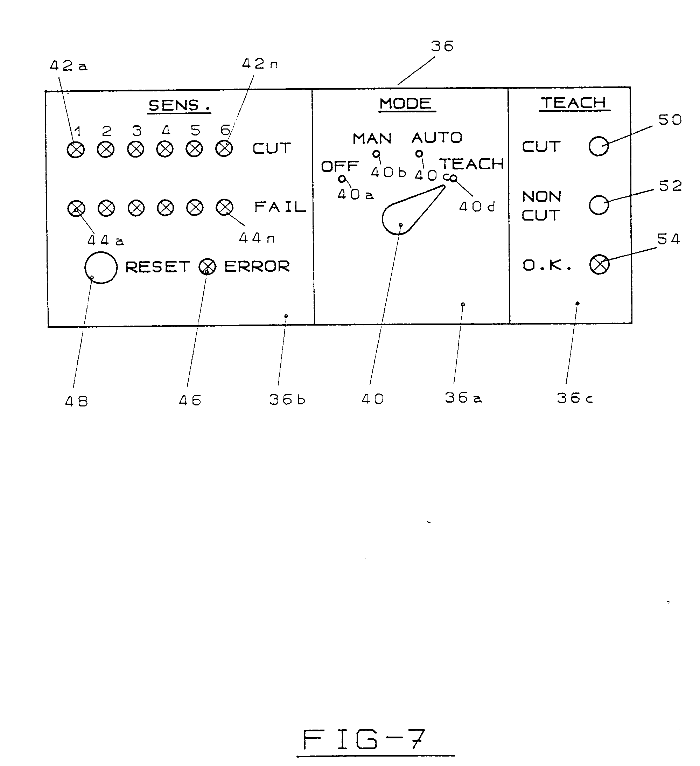

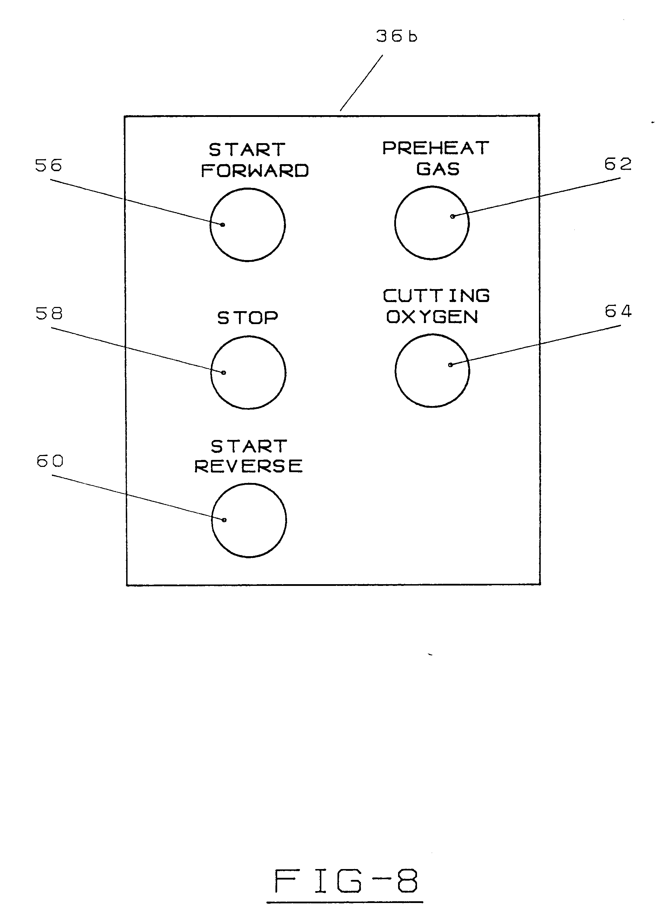

Fig. 1 illustrates a cutting torch, generally designated 2, in position for performing a cutting operation on a workpiece 4. The cutting torch 2 is mounted to the apparatus by a mounting arm 6, which mounting arm also carries a sound detector 8, e.g., a microphone, for detecting the sounds produced during the cutting operation. The sounds so detected are converted to electrical signals and outputted from the sound detector via conductor 10. These signals are used for controlling the apparatus as will be described more particularly below with respect to Figs. 6-13.

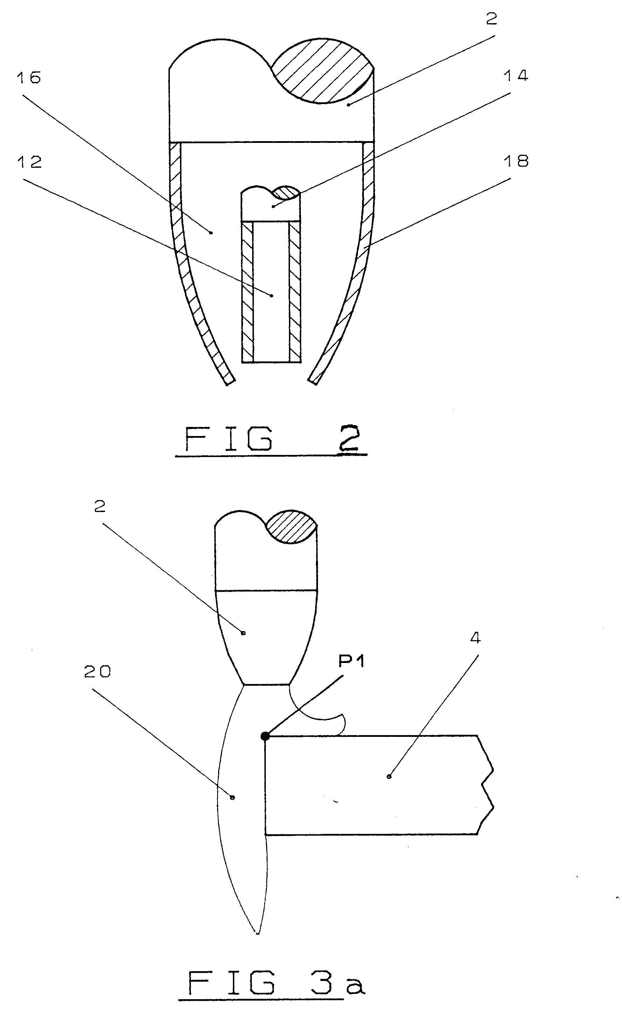

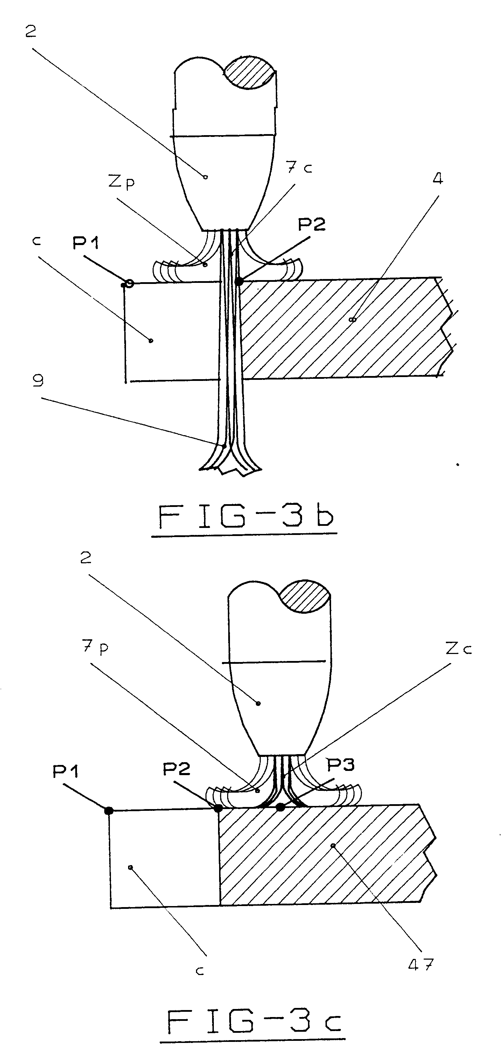

Fig. 2 illustrates the construction of the cutting torch 2. Thus, it includes an inner nozzle 12 supplied from tube 14 with the gas, e.g., oxygen which when ignited actually cuts the workpiece, and an outer nozzle 16 supplied with a mixture of oxygen and other gas from tube 18 to preheat the workpiece 4 when the cutting gas is being supplied to cut the workpiece, the preheating gas is reduced.

Figs. 3a-3c illustrate the process by which the cutting torch 2 cuts the workpiece 4. Thus, the cutting process begins with the cutting torch 2 positioned at the edge of the metal workpiece 4, with the inner nozzle 12 for the cutting gas aligned with point $P_1$ at the edge of the workpiece 4 where the cutting is to begin. This point $P_1$ is preheated by the flame 20 produced by the ignition of the preheating gas flowing through the outer nozzle 16, until point $P_1$ reaches the desired temperature. At this time, the supply of oxygen to the inner nozzle 12 is turned-on to actually cut the metal.

Fig. 3b illustrates the normal cutting process during which the metal is cut by the ignition of the oxygen discharged from the inner nozzle 12. At this time the "preheating" gas from the outer nozzle 16 is reduced. The ignition of the oxygen from the inner nozzle 12 produces a hot cutting zone Zc, whereas the ignition of the preheating gas from the outer nozzle 16 produces a preheating zone Zp. Fig. 3b illustrates a normal cutting process as the cutting torch 2 is advanced from point $P_1$ to point $P_2$ to produce the cut C.

Fig. 3c illustrates what occurs when the cutting is interrupted as the cutting torch moves from point $P_2$ to point $P_3$, e.g., as a result of dirt on the metal workpiece 4, lack of homogeneity in the metal of the workpiece or in the oxygen supplied to the inner nozzle 12, or as a result of vibration of the cutting torch 2 or of the workpiece 4. During this movement of the cutting torch, not only does it fail to cut the workpiece 4 as the cutting torch moves from point $P_2$ to $P_3$, but the flow of unignited oxygen, if it continues through the inner nozzle 12, may even cool the metal workpiece.

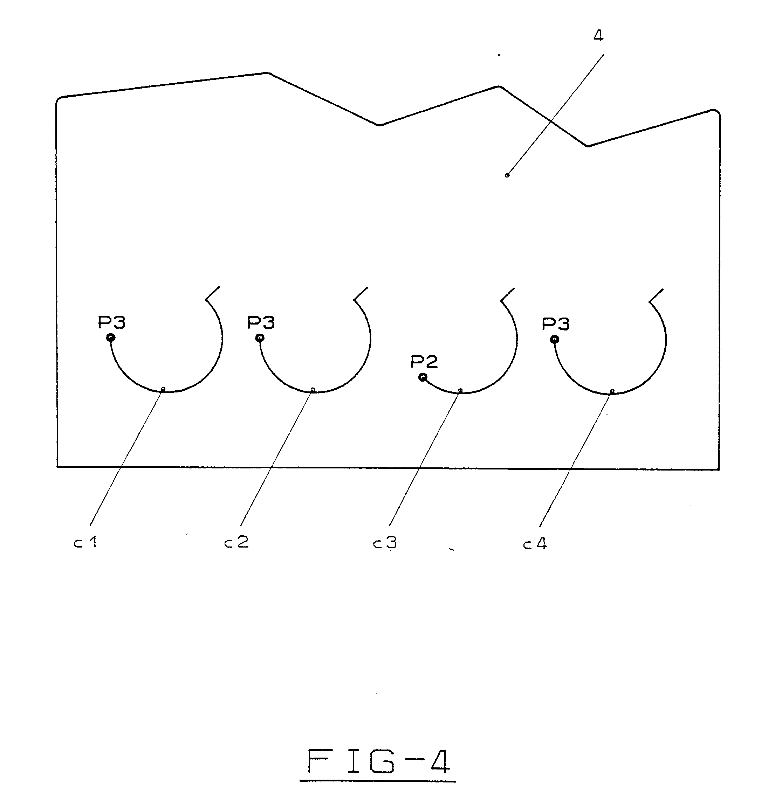

Apparatus of this type usually includes a plurality of cutting torches operating simultaneously. Fig. 4 illustrates a workpiece 4 which is simultaneously cut by four such cutting torches (2a-2n, Fig. 6), each producing one of the cuts $C_1$-$C_4$, e.g., during the cutting of four circular openings. Fig. 4 shows the situation wherein cuts $C_1$, $C_2$ and $C_4$ were properly formed by their respective cutting torches to the cutting points $P_3$, whereas cut $C_3$ was interrupted at point $P_2$, e.g., as described above with respect to Fig. 3c.

When this occurs in a normal torch-cutting machine, either the workpiece 4 must be scrapped, or all the cutting torches must be returned to points $P_2$ of their respective cuts, and the cutting torch producing cut $C_3$ must then be operated to continue the cut from point $P_2$ to a point corresponding to points $P_3$ in the properly-made cuts $C_1$, C2, and $C_4$.

In the described apparatus, however, each cutting torch 2a-2n, Fig. 6 is equipped with a microphone (8a-8n) corresponding to microphone 8 in Fig. 1 to detect the sounds produced by its respective cutting torch. Thus, different sounds are produced during a normal cutting process on the one hand, and an interrupted cutting process on the other hand. This difference in sounds results from the difference in the flow of the oxygen via the inner nozzle 12 when it hits the metal workpiece 4. When the cutting torch is actually cutting, as illustrated in Fig. 3b, the oxygen from the inner nozzle 12 flows through the cut and produces one type of sound or "whistle"; but when the torch is not cutting, as illustrated in Fig. 3c, the oxygen from the inner nozzle 12 does not flow through the workpiece but rather flows along the workpiece surface, producing a different type of sound or "whistle".

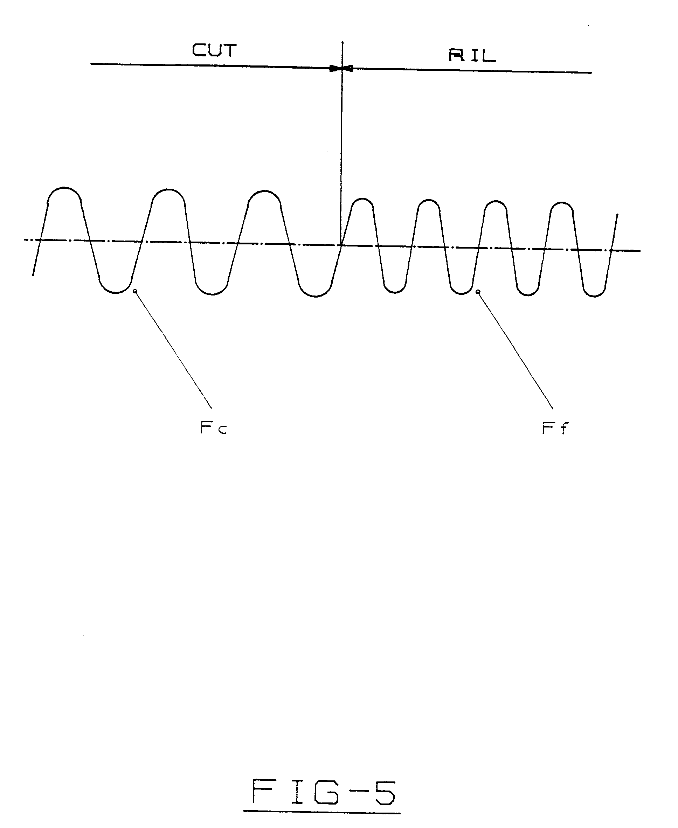

This difference in sounds is schematically illustrated by the waveforms in Fig. 5. Thus, when the torch is cutting the workpiece (Fig. 3b), the flow of oxygen from its inner nozzle 12 produces a whistle of frequency Fc; whereas when the torch is not cutting (Fig. 3c), the flow of oxygen from its inner nozzle 12 produces a whistle of frequency Ff.

Fig. 6 illustrates an overall control system for controlling the operation of a machine, generally designated 20, equipped with a plurality of cutting torches 2a--2n for simultaneously cutting a common workpiece 4, with each cutting torch being equipped with a mircrophone 8a--8n for monitoring the operation of its respective torch according to the sounds produced during the cutting operation. In the example illustrated in Fig. 6, the workpiece is stationary, and the cutting torches 2a-2n are driven relative to the workpiece according to preprogrammed movements; it will be appreciated, however, that in some applications the cutting torches could be stationary, and the workpiece could be driven relative to the cutting torches.

The control system illustrated in Fig. 6 controls not only the movements of the cutting torches 2a-2n relative to the workpiece 4, but also the discharge of the preheating gas via the outer nozzles 16 (Fig. 2) and of the oxygen via the inner nozzles 12 of the cutting torches. The control of such gas supplies to the cutting torches is schematically indicated by the broken-line 24 from machine 20 to the cutting torches 2a-2n.

As further shown in Fig. 6, the outputs from the microphones 8a-8n of the cutting torches 2a-2n are connected to a switching network 26 which, under the control of an input/output circuit 28, feeds the outputs from the microphones to a sound recognition circuit 30. The input/output circuit 28 is in turn controlled by a CPU (central processor unit) 32 via a PC (personal computer) bus 34, which bus establishes two-way communication not only with respect to the input/output circuit 28, but also with respect to the sound recognition circuit 30. The system illustrated in Fig. 6 further includes an operation panel 36 for presetting the overall operation of the apparatus, as well as for displaying various outputs produced during its operation.

The sound recognition circuit 30 receiving the outputs from the microphones 8a-8n may be a standard sound (or voice) recognition circuit which can identify characteristic sound frequencies, or other differences in the waveforms, produced when the respective cutting torch 2a-2n is cutting or not cutting, as schematically indicated by the waveforms in Fig. 5.

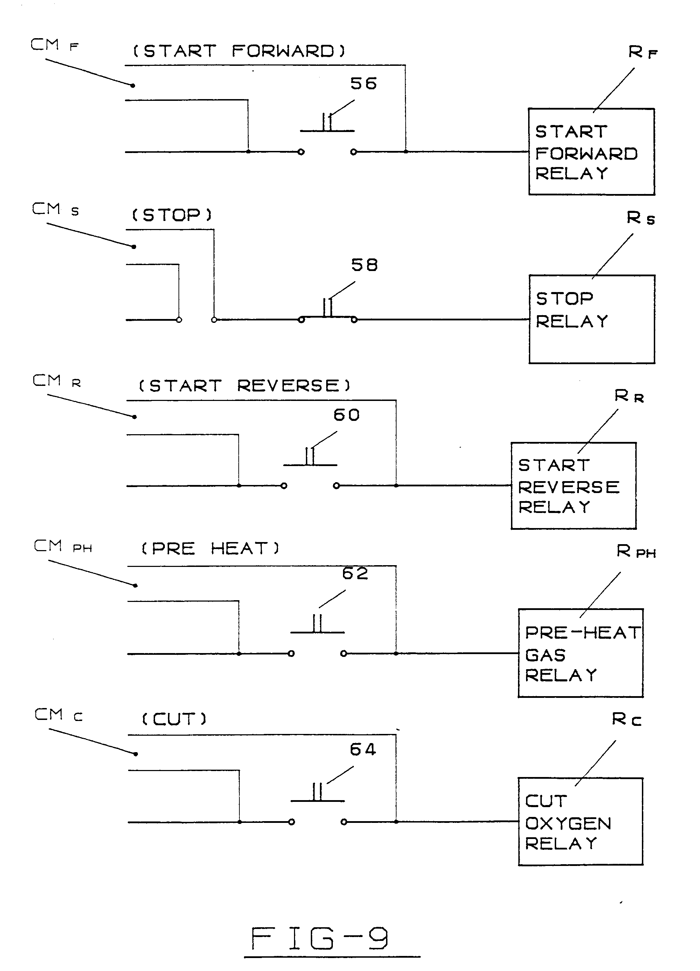

A part of the operation panel 36 is more particularly illustrated in Fig. 7.

Thus, the operation control panel 36 includes a first section 36a having a Mode selector 40 positionable to one of four positions 40a-40d for selecting one of four modes, namely: (1) an Off-mode 40a, which disables the entire monitoring system including the microphones 8a-8n; (2) a Manual-mode 40b, which activates the monitoring system but the outputs of the system merely control indicator displays to indicate to the operator the condition or status of the system during its operation; (3) an Automatic-mode 40c, which effects automatic control of the operation of the machine 20 in response to the outputs of the monitoring system; and (4) a Teach-mode 40d, which may be initially selected by the operator to teach or adapt the system to a particular setup, in order to enable the system to recognize the various conditions to be monitored according to the particular setup.

Operation panel 36 includes a second section 36b having two lines of indicators 42a-42n and 44a-44n. Line 42a-42n includes an indicator for each of the cutting torches 2a-2n to indicate when energized, that the respective cutting torch is actually cutting; whereas line 44a-44n also includes an indicator for each of the cutting torches, to indicate, when energized, that the respective cutting torch is failing to cut.

Section 36b of the operation panel 36 further includes an error-indicator 46 which is energized whenever the monitoring system is unable to determine whether or not there is a problem, e.g., because it was not supplied with sufficient information during the Teaching-mode, or whenever the monitoring system cannot correct the problem when in the Automatic-mode. When this occurs, the monitoring system is deactivated, and the energization of the error-indicator 46 indicates this condition to the operator. Section 36b of the control panel 36 further includes a Reset-button 48 which may be depressed by the operator to restart the system after the error-condition has been cleared.

Operation panel 36 further includes a Teach section 36c. This section contains a Cut-button 50 which is depressed during the Teaching-mode of operation in order to introduce into the system the information necessary to enable it to recognize a proper cutting condition of its respective cutting torch 2a-2n for the particular setup. This section also contains a Non-cut button 52 which is depressed by the operator during the Teaching mode to enable the system to recognize a failed cutting condition in its respective cutting torch. Section 36c of the operation panel 36 includes a further indicator 54 which is energized when the teaching programme introduced during the Teaching mode has been completed.

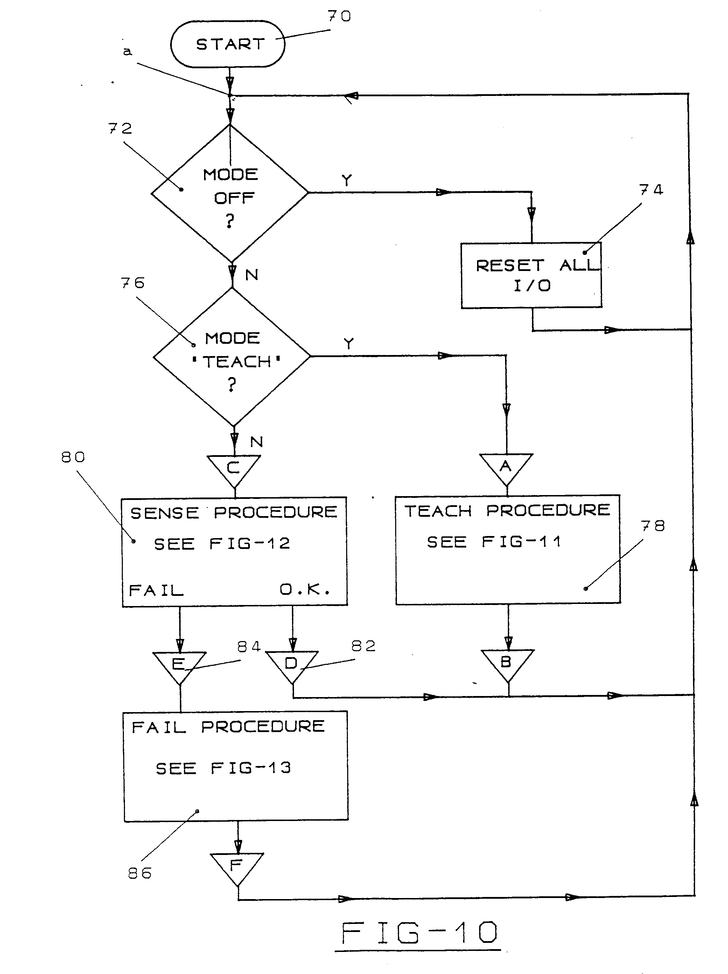

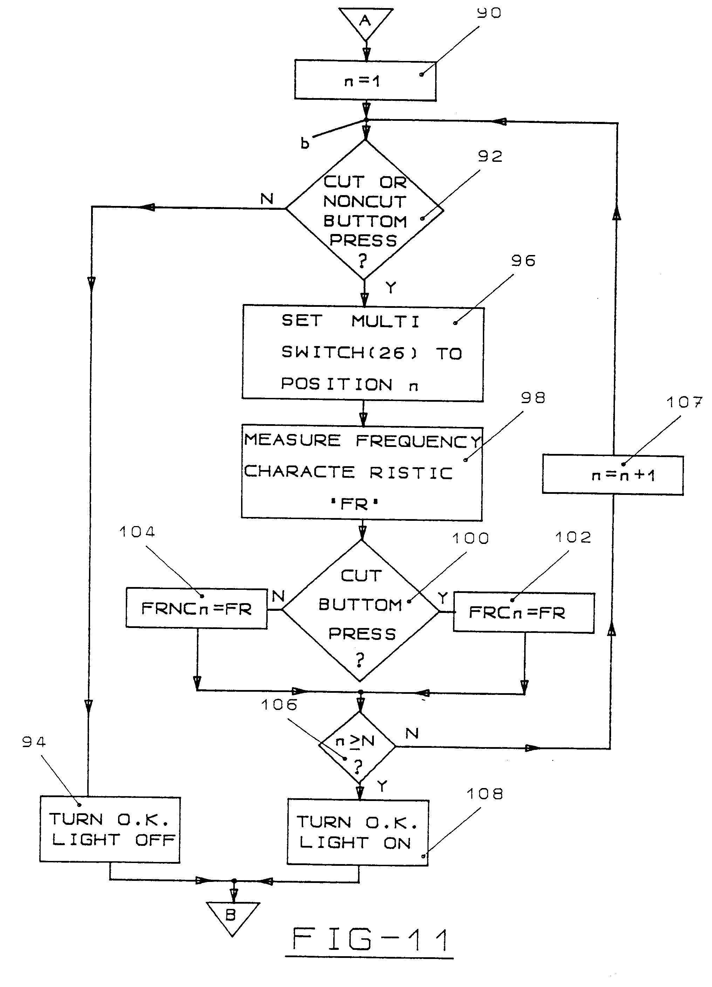

The operation panel 36 further includes a Manual-control section 36d illustrated in Fig. 8. Section 36d includes the basic control buttons for controlling the drive for moving the workpiece 4 relative to the torch cutters 2a-2n (or alternatively, the movement of the torch cutters relative to the workpiece). It also includes a Start-Forward button 56 for starting the drive which moves the workpiece 4 relative to the torch cutters 2a-2n (or vice versa) according to the pre-programmed movements for a particular cutting operation; a Stop-button 58 which is depressed in order to stop the drive; and a Start-Reverse button 60 which is depressed in order to drive the workpiece in the reverse direction according to the preprogrammed movements of the workpiece with respect to the cutting torches. The above manual controls in section 36d of the operation panel 36 are normally used when the machine is operating according to the Manual-mode (i.e., selector 40 has been moved to position 40b, Fig. 7); however, it may be manually operated by the operator to control the machine also during the Teach-mode as well as during the Automatic-mode.

The manual control section 36d of the operation panel 36 include further buttons for controlling the flow of the gasses supplied to the torch cutters 2a-2n. Thus, also shown in Fig. 8 are a Preheat-Gas button 62 which is depressed to start the flow of the preheating gas via the outer nozzle 16 (Fig. 2); and a Cut-Oxygen button 64 which is depressed to start the flow of the cutting oxygen through the inner nozzle 12 of the torch cutters. This section may include other control buttons normally provided in such machines but not directly involved in the control system of the present invention.

Fig. 9 illustrates various commands generated by the CPU (Fig. 6) during the operation of the apparatus, particulary when in the Automatic-mode, for controlling the torch-cutting machine 20 via the bus 34, the input-output unit 28, and the control paths 22 and 24 to the machine feed and to the torch cutters 2a-2n.

Thus, the CPU may output: a $CM_F$ command, parallel to the Start-Forward button 56, for controlling a Start-Forward relay $R_F$ in the machine 20, which starts the forward drive of the workpiece 4 relative to the torch cutters 2a-2n (or vice versa); a Stop-Command $CM_S$, in series with the Stop button 58 so that either the stop command $CM_S$ when issued by the CPU, or depression of the Stop button 58, would actuate a Stop Relay $R_S$ in the machine for stopping the feeding of the workpiece relative to the torch cutters; a Start- Reverse command $CM_R$ parallel to the Start-Reverse button 60, so that either the command or depression of the button will actuate the Start-Reverse relay $R_R$; a Preheat command $CM_{PH}$ parallel to the Preheat button 62 for actuating a Preheat gas relay $R_{PH}$ in the machine for turning-on (or increasing) the flow of the preheating gas to the outer nozzles 16 of the cutting torches 2a-2n; and a Cut-command $CM_C$, parallel to the Cut button 64, for activating the cut oxygen relay $R_C$ for controlling the flow of the gas to the inner nozzles 12 of the cutting torches.

Fig. 10 is a flow diagram illustrating the overall operation of the system.

Thus, as shown in Fig. 10, the first operation the computer executes after START (box 70) is to ask whether the Mode selector 40 (Fig. 7) has selected the Off-mode (box 72). If so, the computer deactivates the monitoring system by resetting all the inputs and outputs to the system, except for the manual controls illustrated in Fig. 8.

On the other hand, if the mode selector 40 is not in the Off-mode position, the computer then asks whether it is in the Teach-mode position (box 76). If so, the computer then executes a Teach-mode procedure (box 78) which will be described below with respect to Fig. 11.

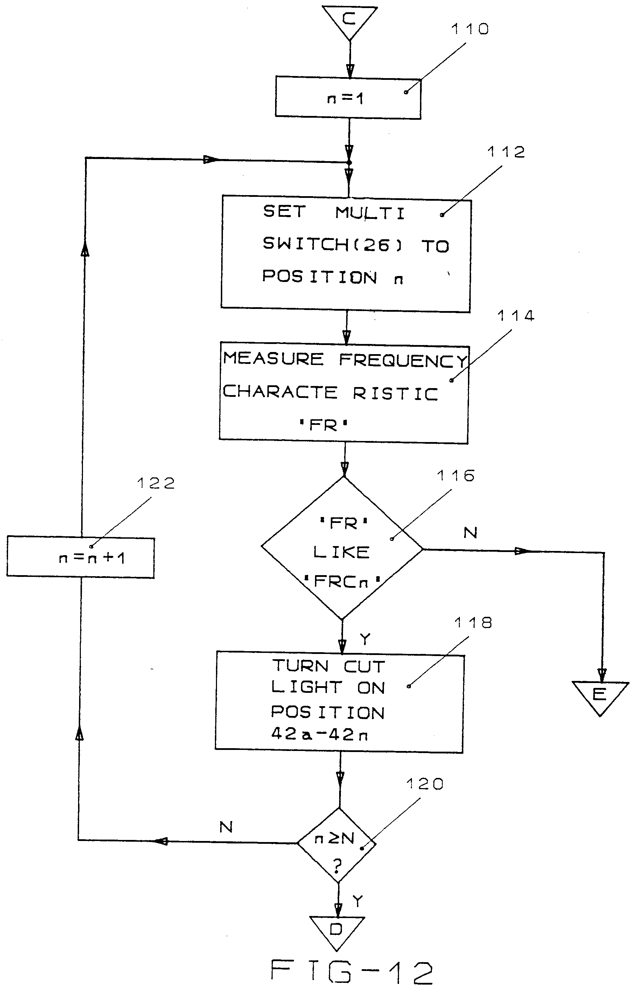

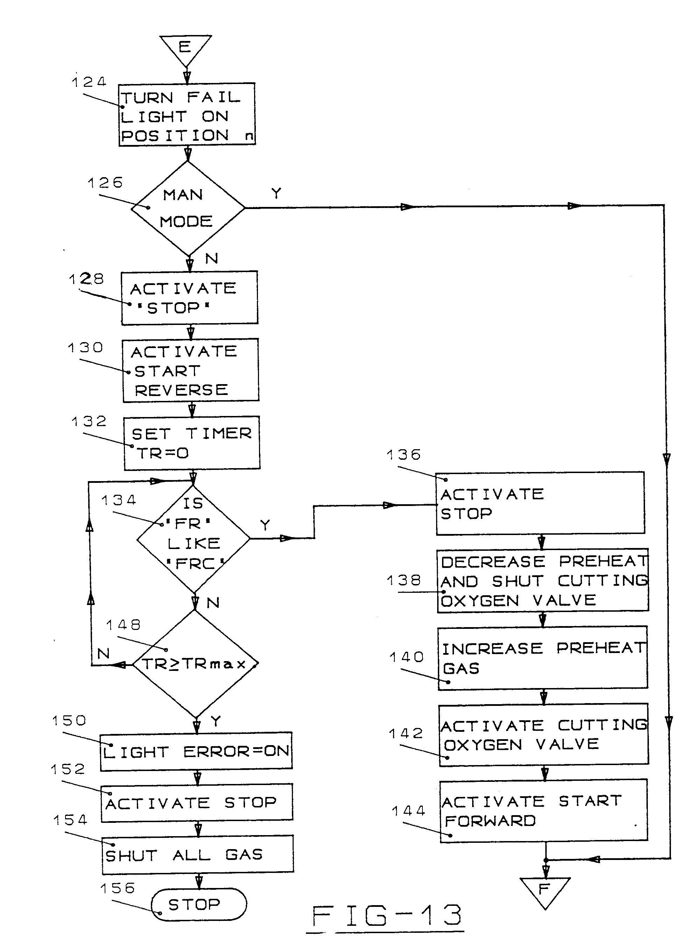

If neither the Off-mode or Teach-mode has been selected, this means that the machine must be either in the Manual mode or Automatic mode. In either case, the machine proceeds to execute a Sense procedure (box 80), described more particularly below with respect to Fig. 12. If as a result of this procedure an OK condition is determined (box 82), the computer returns to the START position; however, if a FAIL condition has been found (box 84), the computer then proceeds to execute a FAIL procedure 86, as described more particularly below with respect to Fig. 13, and then returns to the START position.

The Teach-mode illustrated in Fig. 11 is selected at the beginning of any new setup in order to teach the machine how to distinguish between a proper cutting operation being performed by the respective cutting torches 2a-2n, as illustrated in Fig. 3b, or an improper cutting operation being performed by the respective cutting torch, as illustrated in Fig. 3c.

For this purpose, the computer must be able to distinguish between the sounds or "whistles" picked up by the microphone 8a-8n of the respective cutting torch 2a-2n during the cutting operation. Thus, as described above particularly with respect to Fig. 5, a proper cutting operation produces a sound of one freguency (or other characteristic), as illustrated by the waveform Fc in Fig. 5, whereas an improper or interrupted cutting operation produces a sound of a different frequency (or other characteristic) as illustrated by waveform $F_f$ in Fig. 5.

In order to distinguish between the two, the machine is first placed in the Teach mode (position 40d, Fig. 7). The operator then decides whether the machine is to be taught the proper Cut-signal, in which case the Cut-button 50 is depressed. On the other hand, if the machine is to be taught the Non-cut signal, the Non-cut button 52 is depressed. If neither buttons 50 or 52 is depressed, this means that the Teach mode is not active at this time, in which case the OK-indicator 54 would be deenergized.

More particularly, as illustrated in the flow diagram of Fig. 11, the computer program when in the Teach mode selects the microphone 8a-8n for the first cutting torch 2a-2n (box 90). It then asks whether either the Cut-button 50 or the Non-cut button 52 has been depressed (box 92). If neither has been depressed, it deenergizes the OK-indicator 54 (box 94).

On the other hand, if either the Cut-button 50 or the Non-cut button 52 has been depressed, the computer sets the switching network 26 (Fig. 6) to position "n", identifying the microphone 8a-8n of the respective cutting torch 2a-2n. As indicated above, the computer starts with the microphone for the first cutting torch (n=1), and then sequentially advances "n"until the microphones of all the cutting torches have been selected (box 96).

The computer then measures the sound characteristic (e.g., frequency) of the sound detected by the respective microphone 8a-8n (box 98). The computer checks to determine whether the Cut-button 50 had been depressed (box 100); if yes, it records the detected signal outputted from the respective microphone in its memory as "FRCn" (box 102), but if the Cut-button had not been depressed (meaning that the Non-cut button 52 had been depressed), it records the microphone output as signal "FRNCn" in its memory (box 104).

The computer then checks to determine whether the microphones 8a-8n for all the cutting torches 2a-2n have thus been sampled (box 106), and if not, it returns to the beginning of the teach program (box 107) to sample the microphone for the next cutting torch. When all the microphones have thus been sampled, the OK indicator 54 (Fig. 7) is energized (box 108) to thereby indicate that the Teach procedure has been completed.

When the machine is to be operated according to the Automatic mode, the operator first selects the Teach mode, brings the cutting torches above the workpiece to be cut, and starts the flow of oxygen for both preheating and cutting. The operator then depresses the Non-cut button 52 continuously until indicator 54 is energized, thereby indicating that the Teach-process in the Non-cut mode has been performed with respect to all the cutting torches. The operator then ignites the gasses discharged from the respective cutting torch nozzles (by the conventional controls provided on such machines) to cause the cutting torches to cut the workpiece, and the operator depresses the Cut-button 50. Upon the depression of this button, indicator 54 will be extinguished, but the continued depression of the button causes the machine to learn the characteristic sounds produced during a proper cutting operation for all the cutting torches, and when all the characteristic sounds have been recorded, the Teach mode is completed and indicator 54 again becomes energized.

When this has been completed, the machine in essence has learned both the Cut and the Non-cut states for all the cutting torches, and the operator may then set the selector 40 (Fig. 7) to the automatic mode 40c, whereupon the computer will monitor the operation of the machine, detect any interruptions in the cutting, arid immediately and automatically correct such interruptions.

The Teach-mode would therefore normally be used only when changes are made in the setup, for example when processing workpieces of different thickness, or using burners of different orifice diameters.

It will thus be appreciated that, as a result of the Teach procedure in Fig. 11, there is recorded in the memory of the computer a reference signal for each of the cutting torches 2a-2n for the particular setup. This reference signal may be either signal "FRCn" characteristic of a upper cutting operation being performed by the respective cutting torch, or signal "FRNCn", characteristic of an improper or non-cutting operation of its respective cutting torch.

Fig. 12 illustrates the sensing procedure during the operation of the apparatus when in either the Automatic mode or the Manual mode.

Thus, the computer first starts with the microphone 8a-8n for the first cutting torch 2a-2n (box 110), and sets the switching network 26 to the position (n=1) for the first cutting torch (box 112). The output of the respective microphone 8a-8n is then stored in the computer (box 114) and it is compared with the reference sound signal previously stored for the respective cutting torch during the Teach-mode described above with respect to Fig. 11 (box 116). As indicated in the description of the Teach-mode the reference signal for the particular cutting torch may be either "FRCn", characteristic of the sound produced by the cutting torch when executing a proper cut, or "FRNCn" produced by the respective cutting torch when executing an improper or non-cut.

The computer, in decision box 116, decides whether or not the output from the respective microphone is substantially the same as the stored FRCn signal, or the stored FRNCn signal. If the decision is positive, i.e., it is substantially the same as FRCn (or not substantially the same as FRNCn), the computer energizes the respective cut indicator 42a-42n (Fig. 7) for the respective cutting torch (box 118). It then determines whether all the cutting torches have been thus sampled (box 120); if not, it returns to the beginning of the Sensing procedure to sample the output of the microphone of the next cutting torch (box 122).

If, on the other hand, the decision in box 116 is negative, the computer then proceeds to execute the Fail procudure shown by box 86 in Fig. 10 and more particularly illustrated in Fig. 13.

The illustrated system may thus use as the stored reference sound for the respective cutting torch, the sound (FRCn) produced during a proper cutting operation, or the sound (FRNCn) produced during an improper or non-cutting operation. Preferably both sounds are used in producing the references, in which case the computer may use, as a threshold value for making its decision, the midline between the values of the two sounds. Otherwise, the computer may use a fixed threshold value or an operator-inputted threshold value for making this decision.

The Fail procedure, generally indicated by box 86 in the overall flow diagram of Fig. 10, is more particularly illustrated in Fig. 13. This procedure is performed by the computer as a result of a negative decision in box 116 of the Sensing procedure of Fig. 12; i.e., the computer determines that the output of the sampled microphone indicates that the respective cutting torch is not properly cutting the workpiece.

The first thing occurring in this procedure is to turn on the Fail indicator 44a-44n (Fig. 7) for the respective cutting torch (box 124).

The computer then determines whether the machine is in the Manual mode (box 126), and if so, the computer does nothing further except to return to the Start condition. Thus, when the computer is in the Manual mode, the computer merely controls the Cut indicators 42a-42n or the Fail indicators 44a-44n to indicate to the operator the status of each of the cutting torches, and permits the operator to operate one of the manual controls illustrated in Fig. 8 as a result of this information.

On the other hand, if the manchine is not in the Manual mode (box 126), this means it must be in the Automatic mode. The machine then issues a Stop command ($CN_S$, Fig. 9) energizing the Stop Relay $R_S$ which stops the drive for the workpiece (box 128), and then outputs a Start Reverse command $CM_R$ to actuate the Start Reverse relay $R_R$ to start moving the workpiece in the reverse direction in order to retrace its preceding movement (box 130). At the same time, a timer is set (box 132), since the computer allows only a certain allotted time to correct the malfunction of the respective cutting torch.

As the workpiece is moving in the reverse direction relative to the cutting torches, the output of the respective microphone is continuously sensed and compared with the stored reference value (box 134), in the same manner as in box 116 of Fig. 12. When a positive comparison is made, this means that the cutting torch has returned to the position where the cutting was interrupted (e.g., point $P_2$, Fig. 3c). At this time, the following occurs: a Stop command $CM_S$ (Fig. 9) is again outputted by the computer to actuate the Stop relay $R_S$ (box 136); Preheat and Cut commands $CM_{PH}$ and $CM_C$ are outputted to the respective preheat gas and cut oxygen relays $R_{PH}$ and $R_C$ to decrease the preheat gas (via the outer nozzles 16) and to cut off the supply of oxygen to the inner nozzles 12 of the cutting torches (box 138); the preheat gas relay $R_{PH}$ is actuated (box 140) to increase the preheat gas; the cutting-gas relay $R_C$ is actuated (box 142) to resume the supply of the cutting oxygen (via nozzle 12); and then the Start Forward relay $R_F$ is actuated (box 144) to restart the cutting operation from the point where the cut had been interrupted. As shown in Fig. 10, the computer then goes back to the Start condition.

As shown by decision box 148 at the negative side of the decision box 134, the computer allows only a maximum period of time in which to find a match between the sound outputted by the respective microphone and the reference sound stored in the computer indicating a proper cutting operation. If this maximum period of time elapses without finding such a match, this indicates that the system, for some reason, can not properly correct itself. In such case, the computer energizes the Error-indicator 46 (Fig. 7) on the operation panel 36 (box 150), activates the Stop relay $R_S$ to terminate the feeding of the workpiece (152), and actuates the two gas relays $R_{PH}$, $R_C$ (box 154) to shut off the supply of gas to the burners.

The computer is then in the Stop condition (box 156). Thereafter, in order to restart the machine, the operator must depress the Rest button 48 (Fig. 7).

While the invention has been described with respect to one preferred embodiment, it will be appreciated that many variations may be made. For example, the invention could be used for other types of working processes, such as milling or lathing processes, printing machines, sewing machines. It may also be used in other types of automatically-controlled machines wherein the machine is taught the sounds produced during the normal operation of the machine to enable it to recognize, and thereby to indicate or exert control, when the machine is not properly operating. In addition, whereas the proper or improper operation of the machine is recognized by sounds, it will be appreciated that it could be recognized by other predermined characteristics, such as infrared radiation, or ultraviolet radiation, enabling the system to distinguish between proper and improper operation of the system. Further, while the illustrated system uses cutting torches for cutting, other cutting tools may be used, e.g., lasers.

Many other variations, modifications and applications of the invention will be apparent.

## Claims

1. A method of monitoring the operation of a working tool with respect to a workpiece, comprising:

   detecting a predetermined characteristic produced by the working tool during its proper working of a workpiece, and storing, as a reference, information corresponding to said predetermined characteristic;

   detecting the predetermined characteristic produced by the working tool during a subsequent working of a workpiece; and comparing said latter characteristic with the stored reference information to produce an indication whether or not the working tool is properly working the workpiece.

2. The method according to Claim 1, further comprising: automatically terminating the operation of said working tool with respect to said workpiece when an indication is produced that the working tool is not properly working the workpiece.

3. The method according to Claim 2, wherein preprogrammed relative movement is effected between said working tool and said workpiece during a normal working operation; said preprogrammed relative movement being automatically interrupted when an indication is produced that the working tool is not properly working the workpiece.

4. The method according to Claim 3, wherein said preprogrammed relative movement is also automatically reversed when an indication is produced that the working tool is not properly working the workpiece, until an indication is produced that the working tool is properly working the workpiece.

5. The method according to Claim 1, wherein the working tool is a cutting torch for cutting workpieces, and the predetermined characteristic is the sounds produced by the cutting torch.

6. Apparatus for monitoring the operation of a working tool with respect to a workpiece, comprising: a detector for detecting a predetermined characteristic produced during the working of said workpiece by the working tool; a reference storage device for storing information corresponding to the predetermined characteristic produced by the working tool during its proper working of a workpiece; and comparison means for comparing the information stored in said reference storage device with the detected predetermined characteristic produced by the working tool during a subsequent working of a workpiece, to thereby provide an indication whether or not the working tool is properly working the workpiece.

7. The apparatus according to Claim 6, further comprising control means for automatically terminating the operation of said working tool with respect to said workpiece when an indication is produced that the working tool is not properly working the workpiece.

8. The apparatus according to Claim 7, wherein said control means further includes:
    programmable drive means for effecting preprogrammed relative movement between said working tool and said workpiece during a normal working operation; and interruption means for automatically interrupting said preprogrammed relative movement when an indication is produced that the working tool is not properly working the workpiece.

9. The apparatus according to Claim 8, wherein said control means further includes: reversing means for automatically reversing said preprogrammed relative movement when an indication is produced that the working tool is not properly working the workpiece, until an indication is produced that the working tool has been returend to the point where the proper working of the workpiece had been interrupted.

10. The apparatus according to Claim 9, wherein said working tool is a cutting torch having means for feeding a supply of gas thereto, said predetermined characteristic is the sounds produced by the cutting torch, and said control means includes means for automatically terminating the supply of said gas to the cutting torch, and then for restarting said supply of gas, when said indication is produced following the automatic reversing of said preprogrammed relative movement.

11. The apparatus according to any one of Claims 7-11, wherein said control means further includes a mode selector for selecting: a Teach mode, in which the sounds produced during the proper working of a workpiece by the working tool, as detected by the detector, are stored in said reference storage device; an Operational mode, in which the actual sounds produced during the operation of a working tool on a subsequent workpiece are compared with the sounds stored in said reference storage device to provide an indication whether or not the working tool is properly working the subsequent workpiece; and a Manual mode, in which an indicator is energized to indicate when the actual sounds produced by the working tool are operating in a proper manner on

a workpiece.

FIG-1

10

16

12

2

14

18

# FIG 2

2

20

P1

4

# FIG 3a

FIG-3b

FIG-3c

12

4

P3    P3    P2    P3

c 1    c 2    c 3    c 4

F IG-4

CUT | RIL

Fc Ff

# FIG-5

FIG-6

FIG-7

36 b

56

START
FORWARD

PREHEAT
GAS

62

58

STOP

CUTTING
OXYGEN

64

60

START
REVERSE

F I G - 8

CM F    (START FORWARD)                                    R F

56

START
FORWARD
RELAY

CM S    (STOP)                                             R S

58

STOP
RELAY

CM R    (START REVERSE)                                    R R

60

START
REVERSE
RELAY

CM PH   (PRE HEAT)                                         R PH

62

PRE-HEAT
GAS
RELAY

CM C    (CUT)                                              R C

64

CUT
OXYGEN
RELAY

FIG-9

70

START a

72

MODE
OFF
?

Y

74

RESET ALL
I/O

N

76

MODE
'TEACH'
?

Y

A

N

C

80

SENSE PROCEDURE

SEE FIG-12

FAIL          O.K.

TEACH PROCEDURE

SEE FIG-11

78

E          84          D          82          B

86

FAIL PROCEDURE

SEE FIG-13

F

FIG-10

A

n = 1 — 90

b

CUT OR
NONCUT
BUTTOM
PRESS
? — 92

N

Y

SET MULTI
SWITCH(26) TO
POSITION n — 96

MEASURE FREQUENCY
CHARACTE RISTIC
'FR' — 98

n = n + 1 — 107

FRNCn = FR — 104

CUT
BUTTOM
PRESS
? — 100

FRCn = FR — 102

n ≥ N
? — 106

N

Y

TURN O.K.
LIGHT OFF — 94

TURN O.K.
LIGHT ON — 108

B

FIG-11

C

n = 1   110

SET MULTI
SWITCH(26) TO
POSITION n   112

MEASURE FREQUENCY
CHARACTE RISTIC
'FR'   114

'FR'
LIKE
'FRCn'   116      N → E

Y

n = n + 1   122

TURN CUT
LIGHT ON
POSITION
42a-42n   118

n ≥ N
?   120      N

Y

D

FIG-12

21

EP 0 466 633 A2

FIG-13

22